# EUROPEAN PATENT APPLICATION

(11) **EP 3 056 382 A1**
(43) Date of publication of application: **17.08.2016**
(21) Application number: 15154522.5
(22) Date of filing: 10.02.2015
(51) Int. Cl.: B60P 3/22

(54) **A transportation system for transporting resin and a method for transporting resin**

(71) Applicant: Siemens Aktiengesellschaft, 80333 München (DE)
(72) Inventor: Grove-Nielsen, Erik, 7870 Roslev (DK)

(57) **Abstract**

A transportation system (1), in particular a road tanker, for transporting resin (2) for fiber reinforced plastic components, comprising a transportable tank (7) for receiving the resin and a vacuum pump (8) being fixedly mounted at the transportable tank to evacuate an air section (10) of the tank that is not filled with the resin.

This has the advantage that since the air section is evacuated no mixing of air into the resin can take place during the transport of the resin. Furthermore, no moisture can be absorbed from the resin due to the fact that all water is evaporated during evacuation and then led out through the vacuum pump.

## Description

The present invention relates to a transportation system for transporting resin for fiber reinforced plastic components and to a method for transporting resin for fiber reinforced plastic components.

Fiber reinforced plastic composites are used in a variety of technical products such as cars, wind turbine blades, storage tanks or the like. The composite material consists of a matrix material and a plurality of reinforcing fibers. Often the so called vacuum assisted resin transfer method (VARTM) is used to infuse the liquid resin into the reinforcing fibers. The resin forms the matrix material when cured. As vacuum is applied to the resin and fibers in the mold cavity, even very low contents of mixed-in air or gas will expand greatly and form air voids which will impair the quality of the final product. The transportation of the liquid resin from the manufacturing plant often takes place in road tankers. During transport from the resin manufacturer to the end user, the resin is exposed to excessive movements that will make waves on the surface of the resin. These movements will increase the uptake and dissolving of air into the resin in the tank. Also moisture can be absorbed from the air and from condensation on the tanker walls into the resin. In order to reduce the air content of the resin, a stationary degassing facility of considerable cost in purchase and operation is typically used. To reduce the air content, the degassing unit normally heats up the resin and applies high vacuum.

It is one object of the present invention to provide an improved transportation system for transporting resin.

Accordingly, a transportation system, in particular a road tanker, for transporting resin for fiber reinforced plastic components is provided, comprising a transportable tank for receiving the resin and a vacuum pump being fixedly mounted at the transportable tank to evacuate an air section of the tank that is not filled with the resin.

Fixedly mounted on the tank can be understood as to be directly mounted on the tank or on any other part of the transportation system that is preferably near the tank, like being mounted directly on a chassis frame of the transportation system. As the air section is continuously evacuated, no mixing of air into the resin or diffusion of air into the resin can take place during the transport of the resin. Furthermore, no moisture can be absorbed from the resin due to the fact that all water is evaporated during evacuation and then led out through the vacuum pump. This means, a costly degassing of the resin before use is not necessary. So the quality of an end product, such as a wind turbine blade is improved. Since the resin can be transported air and moisture free, a degradation of the resin is omitted. The costs of the end product are reduced. Normally, in order to reduce the air content of the resin, a stationary degassing facility of considerable cost in purchase and operation, is typically used. To reduce the air content, the degassing units normally heats up the resin and applies high vacuum. A considerable amount of energy and also labor force is thus used for the degassing operation, leading to higher prices of items such as wind turbine blades. This can be omitted with the above described transportation system.

According to an embodiment, the vacuum pump is able to evacuate the air section to a pressure of 20 mbar or lower. This ensures a low air uptake of the resin.

According to a further embodiment, the vacuum pump is arranged on top of the tank. Alternatively, the vacuum pump can be arranged laterally at the tank. The vacuum pump can also be mounted on a chassis frame of the transportation system. According to a further embodiment, the vacuum pump comprises a filter that prevents resin from being sucked into the vacuum pump. The filter may be arranged in the tank.

According to a further embodiment, the vacuum pump is able to evacuate the air section continuously throughout the whole transport of the resin. The vacuum pump preferably runs continuously. Compared to known degassing stations the vacuum pump can be smaller dimensioned.

According to a further embodiment, the air section is filled with a liquid that does not mix with or diffuse into the resin. The liquid may be oil, for example.

According to a further embodiment, the air section is filled with flexible balls that float on the resin. Preferably, the balls or spheres are hollow and flexible. The air section can be completely or partly filled with the balls. The balls reduce the volume of the air section. The balls can contain a moisture adsorbing material. A filter in the outlet of the tank can prevent the balls from being pumped out with the resin.

According to a further embodiment, the resin is covered with a blanket. The blanket or foil may be made of plastic. The blanket floats on a surface of the resin. The blanket prevents contact between the resin and the air as well as moisture.

Further, a method for transporting resin for fiber reinforced plastic components is provided, comprising the steps of: filling a transportable tank with resin and evacuating an air section of the tank that is not filled with the resin, wherein the evacuation is done continuously throughout the transport by means of a vacuum pump being fixedly mounted on the tank.

According to an embodiment, the air section is evacuated to a pressure of 20 mbar or lower.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows an embodiment of a transportation system for transporting resin;
Fig. 2 shows a further embodiment of a transportation system for transporting resin;
Fig. 3 shows a further embodiment of a transportation system for transporting resin;
Fig. 4 shows a further embodiment of a transportation system for transporting resin; and
Fig. 5 shows a block diagram of an embodiment of a method for transporting resin.

In the Figures, like reference numerals designate like or functionally equivalent elements, unless otherwise indicated.

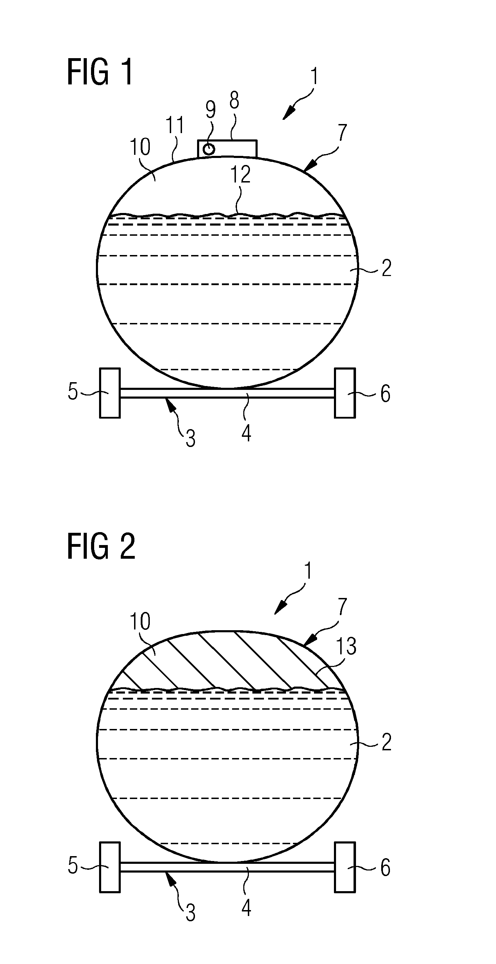

Fig. 1 shows an embodiment of a transportation system 1 for transporting resin 2 for fiber reinforced plastic components.

The resin 2 is in a liquid form. The transportation system 1 is preferably a road tanker. The transportation system 1 has a chassis frame 3 with an axle 4 that carries tires 5, 6. On the chassis frame 3 is provided a container or tank 7 for receiving the resin 2. The tank 7 can have a cylindrical shape.

The transportation system 1 further comprises a vacuum pump 8. The vacuum pump 8 is fixedly mounted to the transportation system 1. The vacuum pump 8 can be directly mounted to the tank 7 or to the chassis frame 3. The vacuum pump 8 comprises a tube 9 that is connected to the tank 7.

The resin 2 does not fill the tank 7 completely. Over the resin 2 is provided an air section 10 that is filled with air. The vacuum pump 8 is provided to evacuate the air section 10. Preferably, the vacuum pump 8 is able to evacuate the air section 10 to a pressure of 20 mbar or lower. The vacuum pump 8 runs throughout the whole transportation process of the resin 2. That means the vacuum pump 8 is able to evacuate the air section 10 continuously throughout the whole transport of the resin 2. As can be seen from Fig. 1, the vacuum pump 8 is preferably arranged on a top 11 of the tank 7. The vacuum pump 8 can comprise a filter that prevents resin 2 from being sucked into the vacuum pump 8. The filter can be provided at the tube 9.

As soon as the resin 2 is pumped into the tank 7, the air above a resin surface 12 is evacuated by the vacuum pump 8 to a pressure of 20 mbar or lower. The vacuum pump 8 could also start before the filling of the tank 7, so that the vacuum pump 8 helps the filling of the tank 7 by suction. As the air section 10 is evacuated, no mixing of air or diffusion of aire into the resin 2 can take place during the transport of the resin 2. Furthermore, no moisture can be absorbed from the resin 2 due to the fact that all water is evaporated during evacuation and then led out through the vacuum pump 8. This means, a costly degassing of the resin 2 before use is not necessary. So the quality of an end product, such as a wind turbine blade is improved. Since the resin 2 can be transported air and moisture free, a degradation of the resin 2 is omitted. The costs of the end product are reduced.

Fig. 2 shows another embodiment of a transportation system 1 for transporting resin 2 for fiber reinforced plastic components.

The transportation system 1 according to Fig. 2 differs from the transportation system 1 according to Fig. 1 in that that the air space 10 is filled with a liquid 13 that is not mixable with the resin 2. For example, the liquid 13 is oil. The tank 7 can be provided with the vacuum pump 8 known from the transportation system 1 according to Fig. 1. The vacuum pump 8 is not shown in Fig. 2. The vacuum pump 8 is optional.

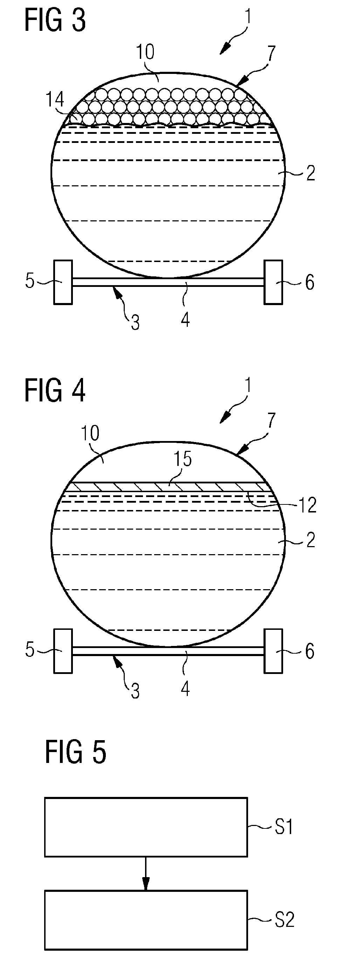

Fig. 3 shows another embodiment of a transportation system 1 for transporting resin 2 for fiber reinforced plastic components.

The transportation system 1 according to Fig. 3 differs from the transportation system 1 according to Fig. 1 in that that the air section 10 is completely or partly filled with flexible spheres or balls 14 that float on the resin 2. Preferably, the balls 14 are hollow and flexible. The balls 14 reduce the volume of the air section 10. The balls 14 can contain a moisture adsorbing material. A filter in an outlet of the tank 7 can prevent the balls 14 from being pumped out with the resin 2. The tank 7 can be provided with the vacuum pump 8 known from the transportation system 1 according to Fig. 1. The vacuum pump 8 is not shown in Fig. 3. The vacuum pump 8 is optional.

Fig. 4 shows another embodiment of a transportation system 1 for transporting resin 2 for fiber reinforced plastic components.

The transportation system 1 according to Fig. 4 differs from the transportation system 1 according to Fig. 1 in that on the surface 12 of the resin 2 is provided a foil or blanket 15. The blanket 15 is preferably made of plastic. In particular, the blanket 15 is flexible. The blanket 15 separates the resin 2 from the air section 10. The blanket 15 prevents contact between the resin 2 and the air as well as moisture. To prevent the resin 2 passing the edges of the blanket 15 it can be fixed to the tank 7. The tank 7 can be provided with the vacuum pump 8 known from the transportation system 1 according to Fig. 1. The vacuum pump 8 is not shown in Fig. 4. The vacuum pump 8 is optional.

Fig. 5 shows a block diagram of an embodiment of a method for transporting resin 2.

The method comprises a step S1 of filling the transportable tank 7 with resin 2. In a step S2, the air section 10 of the tank 7 that is not filled with the resin 2 is evacuated, wherein the evacuation is done continuously throughout the transport by means of the vacuum pump 8 being fixedly mounted on the tank 7. Preferably, the air section 10 is evacuated to a pressure of 20 mbar or lower.

Although the present invention has been described in accordance with preferred embodiments, it is obvious for the person skilled in the art that modifications are possible in all embodiments.

## Claims

1. A transportation system (1), in particular a road tanker, for transporting resin (2) for fiber reinforced plastic components, comprising a transportable tank (7) for receiving the resin (2) and a vacuum pump (8) being fixedly mounted at the transportable tank (7) to evacuate an air section (10) of the tank (7) that is not filled with the resin (2).

2. The transportation system according to claim 1, wherein the vacuum pump (8) is able to evacuate the air section (10) to a pressure of 20 mbar or lower.

3. The transportation system according to claim 1 or 2, wherein the vacuum pump (8) is arranged on top (11) of the tank (7).

4. The transportation system according to one of claims 1 - 3, wherein the vacuum pump (8) comprises a filter that prevents resin (2) from being sucked into the vacuum pump (8).

5. The transportation system according to one of claims 1 - 4, wherein the vacuum pump (8) is able to evacuate the air section (10) continuously throughout the whole transport of the resin (2).

6. The transportation system according to one of claims 1 - 5, wherein the air section (10) is filled with a liquid (13) that does not mix with the resin or diffuse into the resin (2).

7. The transportation system according to one of claims 1 - 5, wherein the air section (10) is filled with flexible balls (14) that float on the resin (2).

8. The transportation system according to one of claims 1 - 5, wherein the resin (2) is covered with a blanket (15).

9. A method for transporting resin (2) for fiber reinforced plastic components, comprising the steps of:
a) filling (S1) a transportable tank (7) with resin (2), and
b) evacuating (S2) an air section (10) of the tank (7) that is not filled with the resin (2), wherein the evacuation is done continuously throughout the transport by means of a vacuum pump (8) being fixedly mounted on the tank (7).

10. The method according to claim 9, wherein the air section (10) is evacuated to a pressure of 20 mbar or lower.
